# EUROPEAN PATENT APPLICATION

(11) **EP 1 367 506 A1**
(43) Date of publication of application: **03.12.2003**
(21) Application number: 02710362.1
(22) Date of filing: 28.01.2002
(51) Int. Cl.: G06F 17/30, G06F 13/00

(54) **SYSTEM FOR PROVIDING INFORMATION CONVERTED IN RESPONSE TO SEARCH REQUEST**

(30) Priority: 29.01.2001 US 771522
(71) Applicant: Sony Computer Entertainment Inc., Tokyo 107-0052 (JP); Sony Computer Entertainment America Inc., Foster City, CA 94404-2175 (US)
(72) Inventor: CHATANI,Masayuki,c/o Sony Comp. Entrtnmt.Amer.Inc., Foster City, CA 94404-2175 (US); KOMATA, Nobuhiro,c/o Sony Comp. Entertainment Inc., Tokyo 107-0052 (JP)
(74) Representative: Turner, James Arthur
(86) International application number: JP0200602
(87) International publication number: WO02061620

(57) **Abstract**

A system and computer-based method for providing transformed content and/or a transformed presentation of information derived from content acquired in response to a client search request (i.e., a search term, index, inquiry, keyword, concept, etc.). A compilation server receives and can transform content obtained from one or more content providers, such content having a format that includes an index field for storing the search request, a data category field, a data type field and a field for the data itself. In one embodiment, the presentation can be a summary of search results achieved by means of integrating and arranging the content according to a particular set of rules, or 'template.' The desired template can be predetermined, selected according to need, prepared based on a client profile, and/or prepared based on attributes of the search request. In a preferred embodiment, the template can merge and arrange data based on *when, where, why, who, what* and *how* descriptive elements related to the request. The system can also offer a selection of presentations based on different templates, providing the client the ability to choose among them. The compilation server has the capabilities of composing the presentations, assigning all content to web pages on the compilation server, and rendering the web pages to the client(s).

## Description

### FIELD OF THE INVENTION

The present invention relates generally to the delivery and presentation of sequestered information over a computer network, and more specifically, to a system and computer-based method for providing an transformed presentation data and/or transformed content data using a compilation server.

### BACKGROUND OF THE INVENTION

Many computer-based systems involve the presentation or display of results acquired in response to search requests made by users. In many networked computer systems, the requirements for providing a useful presentation or display in response to such request can vary greatly. For example, in situations where a user desires to search a term or concept via the World Wide Web (i.e., an encyclopedia-type search, such as on Britannica.com®), there are requirements for the types of information to retrieve, the amount of information to present, and what functionalities are available for getting further information. These system requirements vary greatly between the exemplary encyclopedia-type inquiry and other inquiries, but they also vary based on information specific to the user and can vary based on the actual individual search term requests themselves. Regardless of type of inquiry or specific search request involved, the presentation or display of results must be useful to the user and be helpful for the task at hand to ensure continued success/popularity of that network environment.

Current methods of presentation or display are frequently unsatisfactory due to the provision of either insufficient or incomplete information. Particularly with regard to search results acquired via networked computer systems (such as with Britannica.com®), the results are frequently displayed in a simple list fashion that provides extremely short introductory remarks and a link to the associated URL (uniform resource locator) where more information is available. A single list display such as this contains results, available by additional steps, for the entire range of potential users. However, for inquiries that require more useful and/or personal response, current methods of presentation or display have significant drawbacks.

One problem with current methods of presentation or display of results acquired in response to user search requests is that the procedures undertaken to determine the contents of the 'hit' lists do not take into account information relating to the search query. For search queries that involve some analysis of the query itself to provide useful guidelines for both acquiring appropriate results and presenting meaningful information, this presents a burden in the efficient communication of results.

A drawback with current methods of presentation or display is that the procedures undertaken to determine the contents of the 'hit' lists frequently do not take into account information relating to the user or preferences of the user. For search queries that would otherwise derive advantage from knowledge of such user profiles, this again presents a burden in acquiring appropriate results and presenting meaningful information.

Another drawback is that current methods of display typically require both displaying the 'hit' list and selecting an appropriate URL link before the information is presented to the user. This approach often adds unnecessary steps to the objective of obtaining information as efficiently as possible.

Therefore, current methods of search result presentation or display are generally unable to provide the usefulness, flexibility, and query/user-specific objectives required to efficiently and effectively provide satisfactory output results necessary for quick and successful search completion.

### SUMMARY OF THE INVENTION

A system and computer-based method for providing transformed content and/or a transformed presentation of information derived from content acquired in response to a client search request (i.e., a search term, index, inquiry, keyword, concept, etc.). A compilation server receives and can transform content obtained from one or more content providers, such content having a format that includes an index field for storing the search request, a data category field, a data type field and a field for the data itself. In one embodiment, the presentation can be a summary of search results achieved by means of integrating and arranging the content according to a particular set of rules, or 'template.' The desired template can be predetermined, selected according to need, prepared based on a client profile, and/or prepared based on attributes of the search request. In a preferred embodiment, the template can merge and arrange data based on *when, where, why, who, what* and *how* descriptive elements related to the request. The system can also offer a selection of presentations based on different templates, providing the client the ability to choose among them. The compilation server has the capabilities of composing the presentations, assigning all content to web pages on the compilation server, and rendering the web pages to the client(s).

Other objects, features, and advantages of the present invention will be apparent from the accompanying drawings and from the detailed description that follows below.

### BRIEF DESCRIPTION OF THE DRAWINGS

The present invention is illustrated by way of example and not limitation in the figures of the accompanying drawings, in which like references indicate similar elements, and in which:
Figure 1 illustrates a block diagram of a computer network environment that implements embodiments of the present invention;
Figure 2A illustrates the organization of data, including the various fields of information, according to one embodiment of the present invention;
Figures 2B and 2C illustrate the organization of exemplary data of different data category fields (text data and movie data, respectively), according to one embodiment of the present invention;
Figure 3 is a flowchart that illustrates some compilation server steps taken in achieving the desired page data output, according to one embodiment of the present invention;
Figure 4 is a flowchart that illustrates other compilation server steps taken in achieving the desired page data output, according to one embodiment of the present invention; and
Figure 5 illustrates an exemplary compilation server web page output including both text data and movie data, according to one embodiment of the present invention.

### DETAILED DESCRIPTION OF THE PREFERRED EMBODIMENT

A system and computer-based method for providing transformed content and a transformed presentation of information derived from content acquired in response to a client search request is described. In the following description, for purposes of explanation, numerous specific details are set forth in order to provide a thorough understanding of the present invention. It will be evident, however, to one of ordinary skill in the art, that the present invention may be practiced without these specific details. In other instances, well-known structures and devices are shown in block diagram form to facilitate explanation. The description of preferred embodiments is not intended to limit the scope of the claims appended hereto.

Aspects of the present invention may be implemented on one or more computers executing software instructions. According to one embodiment of the present invention, server and client computer systems transmit and receive data over a computer network or standard telephone line. The steps of accessing, downloading, and manipulating the data, as well as other aspects of the present invention are implemented by central processing units (CPU) in the server and client computers executing sequences of instructions stored in a memory. The memory may be a random access memory (RAM), read-only memory (ROM), a persistent store, such as a mass storage device, or any combination of these devices. Execution of the sequences of instructions causes the CPU to perform steps according to embodiments of the present invention.

The instructions may be loaded into the memory of the server or client computers from a storage device or from one or more other computer systems over a network connection. For example, a client computer may transmit a sequence of instructions to the server computer in response to a message transmitted to the client over a network by the server. As the server receives the instructions over the network connection, it stores the instructions in memory. The server may store the instructions for later execution, or it may execute the instructions as they arrive over the network connection. In some cases, the downloaded instructions may be directly supported by the CPU. In other cases, the instructions may not be directly executable by the CPU, and may instead be executed by an interpreter that interprets the instructions. In other embodiments, hardwired circuitry may be used in place of, or in combination with, software instructions to implement the present invention. Thus, the present invention is not limited to any specific combination of hardware circuitry and software, nor to any particular source for the instructions executed by the server or client computers.

### Compilation System, Server and Process

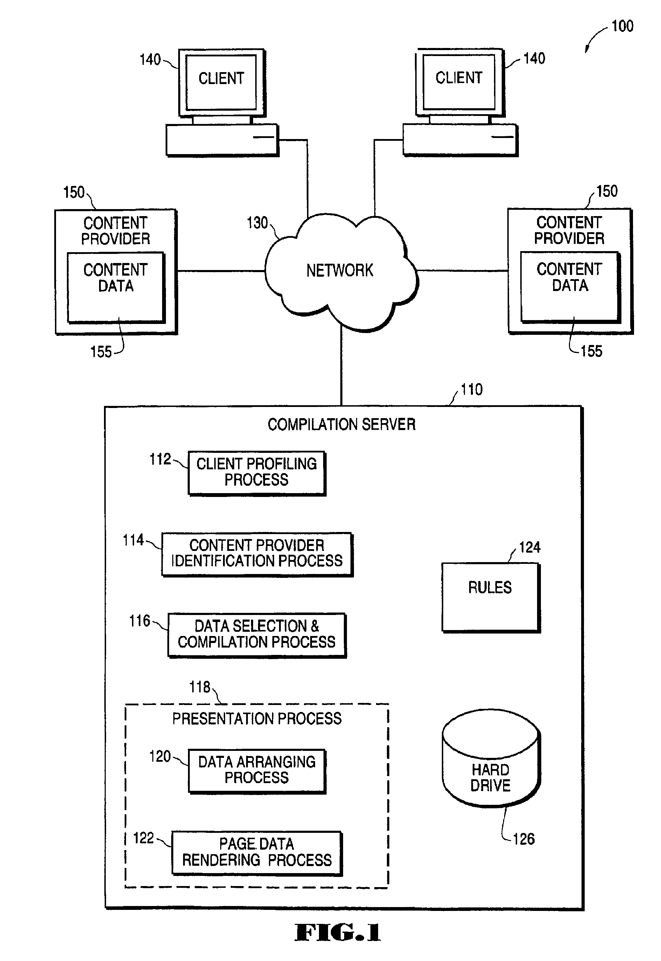

Figure 1 is a block diagram of a computer network system that can be used to receive a client search term, perform a search and then implement a search result producing system, according to one embodiment of the present invention. The compilation system 100 of Figure 1 enables the receipt and arrangement of search result information, as well as the provision of a corresponding, dynamic web-page output presentation. In addition, the compilation system also can be configured to transform the search result information according to various rules.

As illustrated in Figure 1, system 100 includes a compilation server 110 connected by means of a suitable network 130 both to one or more content providers 150 running network servers, and to one or more clients 140. Network 130 may be the Internet, a Wide Area Network (WAN), a Local Area Network (LAN), or any combination thereof. The network is normally a bi-directional digital communications network that connects a client's terminal hardware with the compilation server 110. With current technologies, a CATV (cable television) bi-directional network, ISDN (Integrated Services Digital Network), DSL (Digital Subscriber Line), or xDSL high-speed networks are examples of existing network infrastructures enabling the necessary network connections for implementing embodiments of the present invention. Clients 140 can be personal computers, set top boxes, computer/gaming devices such as PlayStation®2, computing devices of comparable capabilities, or any terminal device providing access to the system. In one embodiment, network 130 may represent the Internet, in which case the server 110 typically executes a web server process to transmit data in the form of HTML data to client computers executing web browser processes.

The compilation server 110 creates original web page presentations from content data and content presentation data that it acquires in response to a search request (search term, index, inquiry, keyword, concept, etc.). In this sense, presentation data is not limited to visual presentation but may also relate to audio data playback. After receiving the search request, compilation server 110 initiates a search of other network servers, such as content providers 150, who have information responsive to the search request in any of a wide variety of topical areas. When the compilation server 110 receives all of the content data and presentation data back from these other network servers, it transforms either the content data, the presentation data or both to create a web page to present to the client computer that sent the original search request.

In one embodiment of the present invention, the compilation server 110 includes a hard drive 126, shown, as well as a microprocessor, a main memory, and a ROM, not shown. In providing search results to clients, compilation server 110 executes a procedure that, for purpose of explanation and description though not limitation, can be categorized into several processes. As seen in the embodiment of Figure 1, the primary functionality of the compilation server 110 can be comprised of a client profiling process 112, a content provider identification process 114, a data selection and compilation process 116, a data arranging process 120, and a page data rendering process 122; with the last two of these processes, together, being referred to as the presentation process 118, as seen in the figure. Thus, the compilation server transforms the presentation data associated with the search results, and creates a new presentation.

The client profiling process 112 represents compilation server 110 procedures that can acquire (request and/or receive) or generate desired client profile information. The client profile can include information specific to the client, the client's preferences, the client's location or environment, client history information such as the client's web-browser history or the history of that particular client's interaction with the compilation server, etc.

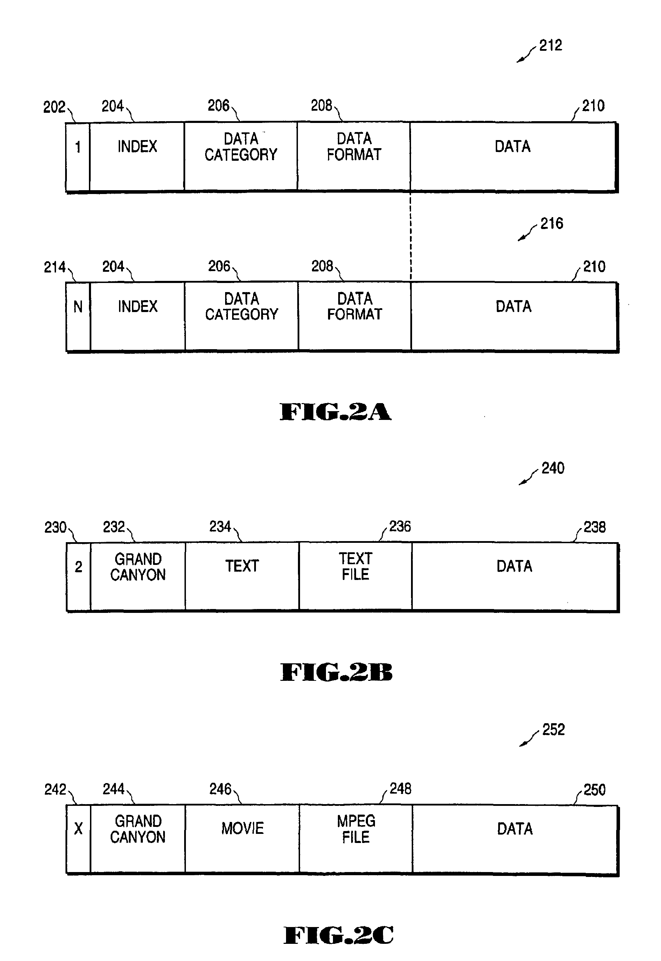

The content provider identification process 114 corresponds to compilation server 110 procedures that identify relevant content providers 150 that would be responsive to the client search request and that then select the appropriate content providers to send the search request to. The content provider identification process 114 acts as a filtering mechanism for potential content providers 150; the identification and filtration of prospective content providers 150 can be accomplished by means of compilation server 110 processing and comparing operations that can be a function of any of a wide variety of information, such as any provided or determined client information (i.e., the client profile, etc.), information related to the content provider(s) 150, the search request, information about the search request (such as information from: the data fields discussed in connection with Figures 2A-2C, fields from any markup language, definitions or other concepts related to the request) or knowledge derived from the search request, as well as any other information used as search protocol by present search engine servers, such as information used by HotBot®.

The data selection and compilation process 116 achieves, as one of its main functions, the identification of relevant content data 155 from the content providers. The data selection and compilation process 116 can perform its identification function based on the wide variety of information discussed with respect to the content provider identification process 114 operations, above. This identification function can also be based on either one or more desired rules 124 for selecting or determining content, or a template that essentially embodies one or more of such rules. These rules 124 and such templates can be pre-determined, selected according to need, derived from the same wide variety of information addressed above, derived from client input or otherwise client-based, and/or based on compilation server settings or otherwise server-based. The data selection and compilation process 116 can also include some or all of the data integration and arrangement functionality, discussed more fully in connection with the data arranging process 120 below. Essentially, all of these filtering operations/functions that both the content provider identification process 114 and the data selection and compilation process 116 do, then, can be achieved based on any of the rules, templates, profiles and data or information (the "variables") discussed in this specification.

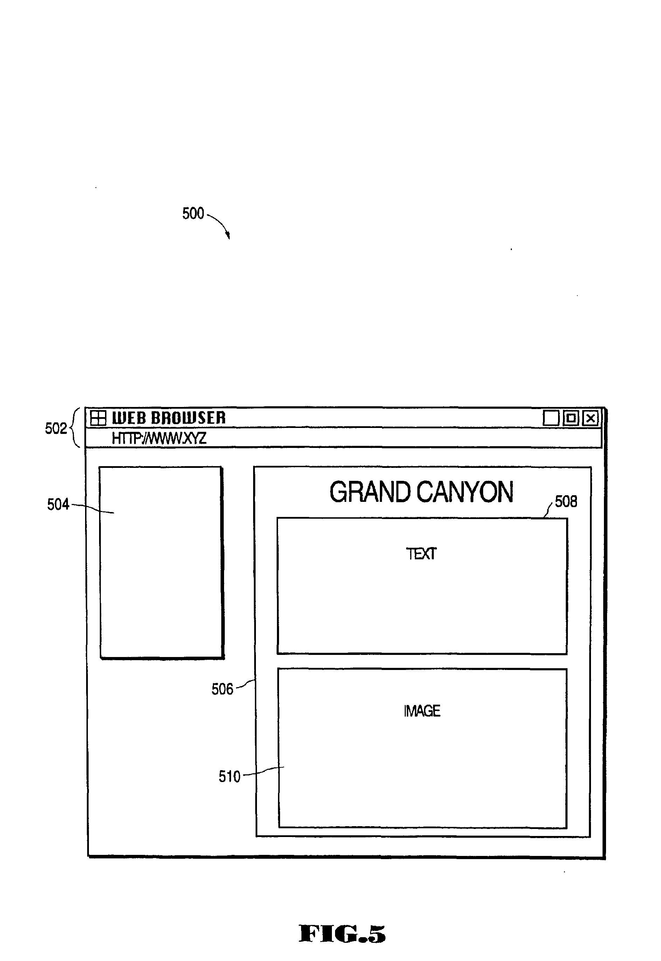

With respect to the presentation process 118, the data arranging process 120 arranges, merges and/or transforms all of the content data and presentation data received from content providers 150 into a new presentation, as addressed in connection with Figure 5. The page data rendering process 122 assigns all data to web pages on the compilation server 110, and renders web pages based on information from the data arranging process 120. The processes within the presentation process 118 are responsible for such manipulations as translating the written and audio portions of the presentation into the appropriate language for the particular client, converting to the appropriate currency and other such conversions to make the presented information meaningful. Such manipulation or conversion functionality can be performed by either data arranging process 120 or the page data rendering process 122, or it may be distributed between them. However, the presently preferred embodiment places this functionality within the page data rendering process 122. Any of the functionality of these two processes can also be achieved based on any of the variables discussed in this specification. The data arranging process 120, the page data rendering process 122, and the first three compilation server 110 processes discussed above can be stored in the hard drive 126 as a program of the compilation server 110.

Figures 2A-2C illustrate the organization of data and information used for producing the web page output within the compilation system, according to one embodiment of the present invention. All of the content available from the content providers 150 can have this format. As seen in Figure 2A, the format includes a data enumeration field, an index field 204 for storing the search request, a data category field 206, a data format field 208, and a field for the data itself, or data field 210. The data enumeration field contains the number or rank of the particular piece of content among other pieces of content. The content pieces of Figure 2A show a range beginning from a first piece of content data 212 having a data enumeration field containing "1" 202 to an Nth piece of content 216 having a data enumeration field containing the letter "N" 214. The index field 204 contains the search request, and so is a title, a name, a search term, an index, an inquiry, a keyword, a concept, or the like. The data category field 206 indicates whether the data is text, audiovisual, graphics, etc., and the data format field 208 indicates the type of file (i.e., JPEG, MPEG, MP3, etc.).

Figures 2B and 2C illustrate the organization of exemplary data of different data category fields (text data and movie data, respectively), according to one embodiment of the present invention. Figure 2B illustrates a piece of content 240 including a data enumeration field containing "2" 230, an index field containing the request 'Grand Canyon' 232, a data category field indicating 'text' data 234, a data format field indicating a 'text file' format 236, and a data field containing text data on the Grand Canyon 238. Figure 2C illustrates a piece of content 252 including a data enumeration field containing "X" 242, an index field containing the request 'Grand Canyon' 244, a data category field indicating 'movie' data 246, a data format field indicating an 'MPEG file' format 248, and a data field containing movie data on the Grand Canyon 250.

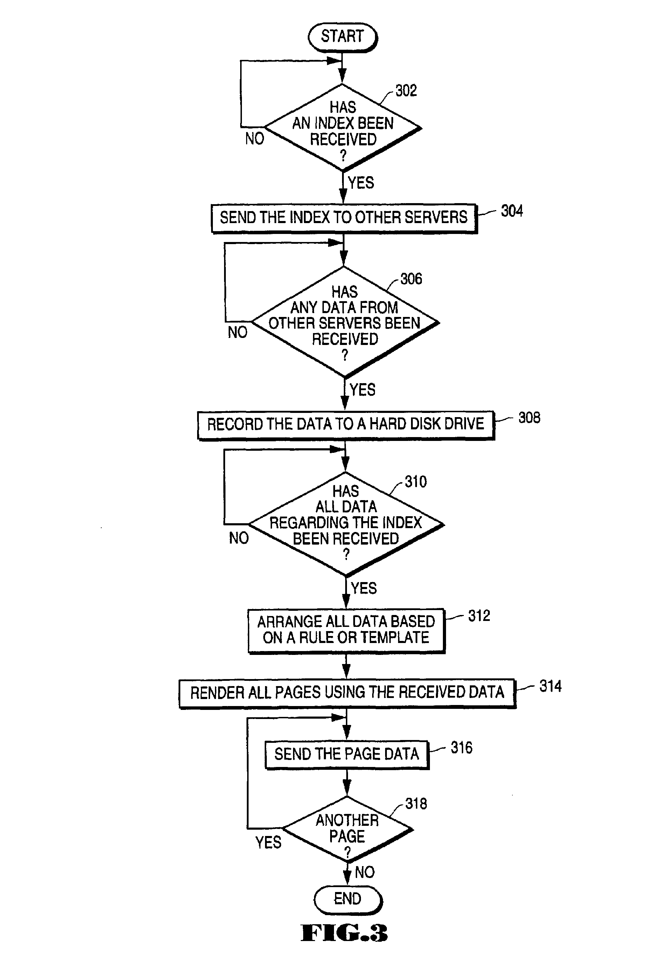

Figure 3 is a flowchart that illustrates some compilation server steps taken in achieving the desired presentation output, according to one embodiment of the present invention. Execution of this compilation process requires the receipt of necessary content and presentation information, as well as the arrangement and packaging into the desired page data output. Once a user enters a request at client 140 (Fig. 1), the request can be transmitted to the compilation server. The subsequent steps that the compilation server goes through to achieve the desired output, as detailed in Figure 3, begin at this initial step of transmitting the search request.

According to the embodiment of Figure 3, a compilation server first performs a search request detecting step 302, which determines whether or not a request has been received from the client. If no request has been received, the compilation server remains in this receptive state awaiting the receipt of a request from a client. Once a request has been received from the client, the compilation server then sends the received request out to the content providers, step 304, for the purpose of conducting searches to determine whether or not these servers have any information or data concerning the request.

Next, in step 306 of this embodiment, the compilation server detects whether or not content data and presentation data concerning the request have been returned from any of the content providers. If not, the server remains in a receptive state awaiting such return content. If such return content has been received, the compilation server proceeds to step 308 where the received content can be recorded onto one or more hard drives. After such data recording, in step 310, the compilation server verifies whether all of the data concerning the request have been received. If all of the data have not been received, the server will maintain the state of receiving data and recording it onto the hard drive. Once all of the data has been received, however, the compilation server moves on to the next operation.

As seen in the embodiment of Figure 3, the compilation server will next arrange all of the received content data based on a rule or template, step 312. This constitutes a transformation of the original presentation data received from the content provider. Specifically within step 3 12, the data arranging process 120 (Fig. 1) applies one or more rules or procedures (that can be lumped into a template) to arrange the content based on the desired transformation. A desired template can be predetermined, selected according to need, and/or prepared based on a client profile and/or attributes of the search request or the variables discussed above. In an exemplary embodiment, the template can transform, merge and arrange data based on *when, where, why, who, what* and *how* elements related to the request. The template can require arrangement of information according to a predetermined rule; i.e., simplistically, the information might be arranged according to the data category field, or it might be arranged based on a chronological order. When chronology is used as a rule of arrangement, the data format field must include chronological data. In any event, a more detailed explanation of the nature and processes of such templates or rules will be given in the 'Functionality' section below.

Once all of the data has been arranged according to the desired rule, rules or template, step 312, the compilation server then commences a procedure to *render* all of the web pages using the received, arranged content. In the embodiment of Figure 3, the rendering step, step 314, is accomplished by the page data rendering process 122 portion (Fig. 1) of the compilation server 110. The page data rendering process 122 assigns information and data to web pages based on the arrangement and design rule that shows individual locations on web pages. This process will also be explained in more detail in the 'Functionality' section.

After the rendering step involving transformation of original presentation data from the server, a rendered page data can be sent to the client, step 316 of the Figure 3 embodiment. On a client display, a produced web page can be shown (as illustrated by Figure 5, detailed below). After the first page is sent, the compilation server then proceeds to the final step of this process: the server asks if there is another web page to transmit, step 318. If there are no other web pages to transmit to the client, the process is complete. If there is another web page to transmit, the server then proceeds back to the step of sending the web page data (step 316) and iterates the last two steps until all of the web pages have been transmitted.

As described above, the process of this invention achieves the creation of one new web page based on numerous pieces of content usable for the explanation of or answer to a search request, as well as for the general dissemination of information. A client can thereby get an original, comprehensive and dynamic web page output in real time.

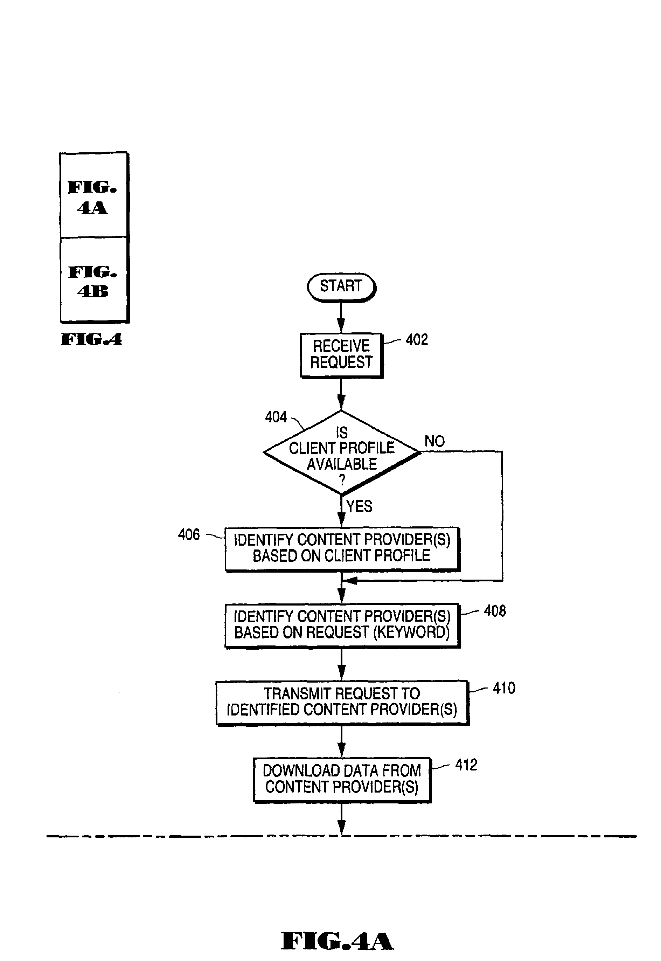

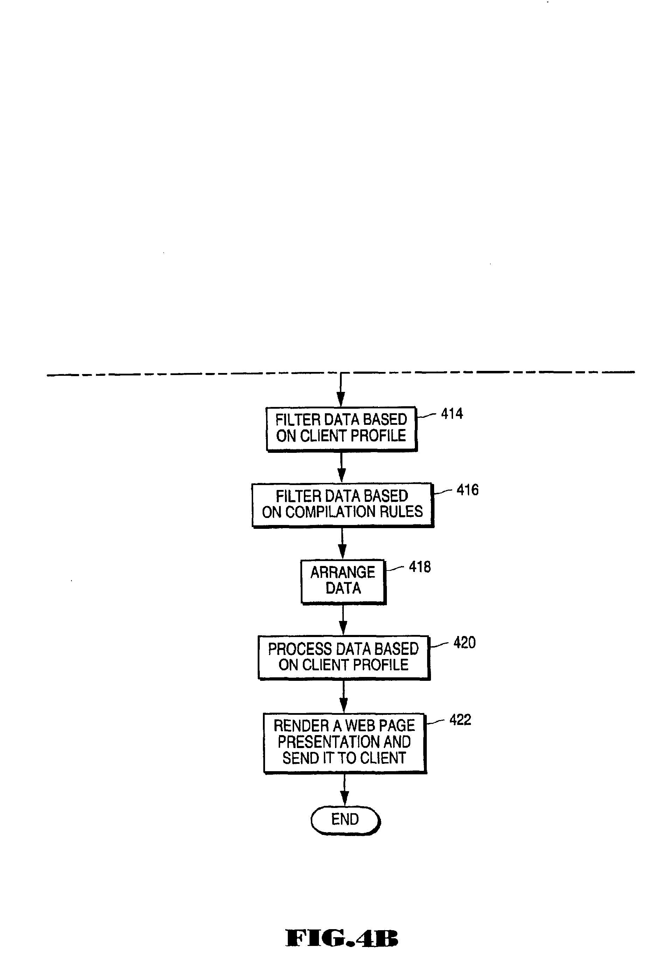

Figure 4 is a flowchart that illustrates a different sequence of compilation server steps taken in achieving the desired page data output, according to another embodiment of the present invention that involves transformation of content data and content presentation data. As with the previous embodiment, the embodiment of Figure 4 begins at the initial step of transmitting the search request from the client to the compilation server. Once the request is received, step 402, the compilation server determines if a client profile is available, step 404. If a client profile is available, the compilation server proceeds to identify appropriate content providers based on the client profile, step 406. This identification of appropriate content providers equates to a narrowing of the selection of content providers available. Next, after step 406 in the case a client profile is available or directly after step 404 if one is not, the selection of appropriate content providers is further narrowed by the identification of content providers based on the search request, step 408.

In step 410, then, the compilation server transmits the client request to the identified content providers. After the content providers perform their respective procedures to identify content data responsive to the supplied request, the identified content data is downloaded from the content providers to the compilation server, step 412. In the next step, step 414, the compilation server 100 filters the originally downloaded content data based on the client profile, if one was available. The content data is then filtered or transformed again according to one or more compilation rules and/or templates comprised of one or more compilation rules. Additionally, although not shown in Figure 4, the compilation server can also filter the content data by any of the other variables discussed in the specification above.

The filtered content data is then arranged, step 418, by the data arranging process element of the compilation server. This step involves transforming the original content presentation data. In a last content packaging step, the filtered and arranged content data is then prepared for the particular client who made the search request by processing the original content presentation data based on the client profile, step 420, if a client profile was available. Finally, the compilation server renders a web page presentation containing the transformed content data and the transformed content presentation data and sends it to the client, step 422. In a presently preferred embodiment, the rendering portion of the final step by the compilation server includes translation and conversion functions that are required to create a web page presentation that is tailored to the client environment, as detailed further below.

Figure 5 is an illustration of a graphical user interface showing an exemplary web page presentation provided by the compilation server, according to one embodiment of the present invention. In general, client interface 500 of Figure 5 is comprised of a header/menu bar section 502, one or more user control and/or input sections 504 (which can include input fields, interactive GUI elements or any other such functionality presently available), and the presentation window 506. In the basic illustration of Figure 5, the presentation can comprise sound (not shown) and a presentation window 506 including portions of text 508 and video images 510, all of which being integrated and compiled from the content data and the content presentation data received in response to the search request. More specifically, the overall user output can be provided via client computer output peripherals (display and/or sound peripherals), and can be comprised of video or graphics data, sound data, program data, or any combination thereof. These pieces of data are arranged in an original manner that allows a user to be presented a more comprehensive and unified understanding of the information received in response to the search request. According to one embodiment of the invention, the content data received from the content provider is not transformed, but the original content presentation data is transformed. In another embodiment of the invention, the content data itself is transformed by the compilation server, as well as the content presentation data.

### Compilation Server Functionality and Template Specifics

As seen in the embodiment of Figure 1, a plurality of content providers 150 can be connected to the network 130 associated with the compilation system 100. Each content provider includes or has access to databases that store various information and data such as text data, video data, image data, sound data, CAD data of buildings, and information on human beings (movement, face, human body); essentially the entire range of data and file types available over the Web today. A compilation server 110 is also connected to the network for the purposes of association with one or more clients 140 acting as users of the compilation server 110. The compilation server has, as one main objective, the arrangement and audiovisual presentation of information and data to the user in a cohesive story-like format.

Once a user has input a search request, e.g., a food-related index such as "beef stroganoff" or "Johnsonville® bratwurst," the request is sent to the compilation server 110. The compilation server then retrieves content data 155 from the server databases to compose a presentation or story of "beef stroganoff," for example. The content data retrieved from the servers might come from exemplary databases of: an encyclopedia database, cuisine or recipe databases, a restaurant guide database, a music archive database, a "who's who" database, an ingredients database, a wine guide database, a book database, a news/archive database, a map database, a city and building database, or any other database. In order to retrieve necessary or appropriate content data, the compilation server 110 can also select (limit) which databases to actually search based on any of the variables discussed above.

In this example, the compilation server 110 would then compose a presentation for the client computer based on the information received on "beef stroganoff" using a template. In one exemplary embodiment, the presentation template can merge and arrange data based on *when, where, why, who, what* and *how* descriptive elements as they relate to the request. Any of the various retrieved content data (video images, sound/voice, music, etc.) can be arranged and combined to make up compositions for each of these descriptive elements. The descriptive element compositions can be arranged in various order and/or combined in diverse fashion. Essentially, the separate pieces of content data retrieved by the compilation server in response to the client request are merged so that all of the separately retrieved content data can be presented in a cohesive manner.

In order to generate presentations for particular applications, in one embodiment, various templates may exist or can be prepared based on attributes of the search request itself and/or other variables. Exemplary attributes of a search request might be: person (musician, politician, performer, etc.), category or phenomenon (historical, social, etc.), corporation, thought, place, food, etc. Search request attributes lending themselves to *when,* such as a date, and *where,* such as a place, information can result in such temporal and location data being retrieved, transformed and sent to the client for display or presentation; such retrieved data can include audio and video files. Request attributes of *why*, such as 'reason the request appeared,' and/or *who,* such as 'person who triggered the request,' can result in such reason or person information being retrieved, composed, and sent to the client for display or presentation. Similar retrieval, composition, and transmission can be done for the request attributes related to *what.* Finally, request attributes of *how,* such as how to make or compose the request, can result in such *how* information being retrieved, composed, and sent to the client for display or presentation.

In the creation of an exemplary *when & where* presentation, images that show days (period) and place are retrieved from the encyclopedia database or city and building database, and composed for presentation at the client computer. The retrieval and composition may be executed based on when and where the subject of the search request was invented, discovered, popularized or used. As background audio portion of the presentation, music contemporaneous with and/or otherwise related to the days and place can be played. Additionally, text data can be converted to sound (i.e. voice) data so as to be audibly reproduced.

In the creation of an exemplary *why & who* presentation, the compilation server retrieves information concerning the reason the subject of the search request was invented or discovered from an encyclopedia database, and can also retrieve information on people contemporaneous with and/or otherwise related to the request. The retrieved 'reason' and 'information of the related people' would be the information of the person or events (in the case of "beef stroganoff," an event that triggers the invention of "beef stroganoff"), other related things or concepts (in the case of "beef stroganoff," other related dishes), related locations or areas (places or restaurants), and the related period. Next, the compilation server retrieves content data information corresponding to each of the retrieved content data from such databases as: encyclopedia, cuisine or recipe, restaurant guide, music archive, "who's who," ingredients, wine guide, book, news/archive, map, a city and building, etc. This retrieved content data is then used to compose a presentation via transformation of the content data, the content presentation data or both.

In the creation of an exemplary *what* presentation using the "beef stroganoff" example, three sub-presentations might be produced for display to the client. In the first sub-presentation, general information, as to just what the request is, can be retrieved from the encyclopedia and cuisine databases; image data that depicts the request is also retrieved. If the explanation or definition is text data, it may be converted to sound or voice data. Then, a presentation that represents the request is composed using the explanation and the image data. In a second sub-presentation, places where the request is offered can be retrieved from a restaurant guide database. The retrieved data can include information covering rank or rating, a map showing the restaurant location, menus, prices, etc.; a presentation may then be composed based on such data. In a third sub-presentation, book information regarding the request can be retrieved from a book database. The information would include the contents, and additionally book reviews and other related information that might be found on book-related Web-sites like Amazon.com®. A presentation may then be composed utilizing this information. If the information is text data or sound data, images representing the request can be displayed along with such non-visual data.

In the creation of an exemplary *how* presentation, once again for the search request of "beef stroganoff," information on how to make the request is retrieved from a cuisine recipe database. Additionally, information on the ingredients included in the recipe are retrieved from an ingredient database, and image data can be retrieved from a suitable database. The retrieved image can then also be displayed using three-dimensional graphics, when appropriate. When such three-dimensional images are displayed, the 'camera work' or image processing would be defined in a template.

Turning back to general presentation production, commonly a number of different presentations can be produced based on one search request. In one embodiment, then, it is helpful for a client or a user to delineate or assign what information he or she needs in order to yield the desired presentation. To implement such functionality, the compilation server can offer a choice of presentations to a user, with the user then choosing one (or more) of them. The offering of presentation choices can be made before or after the compilation server actually produces the presentations. For example, in the case of "beef stroganoff," a user could choose a presentation on how to cook "beef stroganoff" rather than a presentation on what "beef stroganoff" is.

In one embodiment of the present invention, a client or user is able to modify some portions, or all, of the presentation templates. For example, the genre of music, the voice, and the camera work in three-dimensional graphics, or other features, can be adjusted or altered to fit a particular individual's needs or desires.

In the embodiments addressed above, various functions and procedures may or may not be carried out with the use of artificial intelligence processing. For example the knowledge the compilation server has acquired about the surrounding neighborhood servers may or may not be implemented with artificial intelligence processing. The procedures of determining, sorting, and filtering appropriate content can be implemented by known artificial intelligent processing such as numerical cutoffs based on search result percentage rankings. Further embodiments contemplate greater implementation of artificial intelligence in all phases of the compilation servers processing steps.

In the foregoing, a system has been described for providing original web page presentation of information based on a search request. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative rather than a restrictive sense.

## Claims

1. In a network system comprising a client computer with user display, a compilation server and at least one network server containing original content, a method for providing output data based on data acquired from the network server in response to a client search request, the method comprising the steps of:
providing the search request from the client computer to the compilation server;
at the compilation server, identifying prospective original content providers;
at the compilation server, sending the search request to the prospective content providers;
receiving, by the compilation server from the network server, original server content data and original server presentation data responsive to the search request;
transforming the original server presentation data into transformed presentation data according to a predetermined rule; and
outputting the original server content data using the transformed presentation data on a client computer output peripheral;
wherein the data is output in the form of a unitary, cohesive Web page output.

2. The method of claim 1, including the step of storing the content data in the compilation server.

3. The method of claim 1, wherein the step of transforming the data includes additional processing accomplished with artificial intelligence.

4. The method of claim 1, wherein a template including one or more rules is used to transform the data.

5. The method of claim 4, wherein the template for transforming the data arranges the data based on *when, where, why, who, what* and *how* descriptive elements related to the request.

6. The method of claim 4, wherein the template for transforming the data modifies the data based on *when, where, why, who, what* and *how* descriptive elements related to the request.

7. The method of claim 6, wherein the template for transforming the data arranges the data based on *when, where, why, who, what* and *how* descriptive elements related to the request.

8. The method of claim 1, wherein the step identifying prospective original content providers is accomplished using an acquired client profile.

9. The method of claim 1, wherein the step identifying prospective original content providers is accomplished based on a variable selected by the client.

10. The method of claim 1, wherein the content data is formatted into categories including an index field, a data category field, a data format field and data field.

11. The method of claim 10, wherein the data stored in the data field is video or graphics data.

12. The method of claim 10, wherein the data stored in the data field is sound or program data.

13. The method of claim 1, wherein the receiving step comprises downloading content data over a network, and the transformed data is provided over a network.

14. The method of claim 2, wherein the transformed data is provided to the client computer that generated the request.

15. In a network system comprising a client computer with user display, a compilation server and at least one network server containing original content, a method for providing output data based on data acquired from the network server in response to a client search request, the method comprising the steps of:
providing the search request from the client computer to the compilation server;
at the compilation server, identifying prospective original content providers;
at the compilation server, sending the search request to the prospective content providers;
receiving, by the compilation server from the network server, original server content data and original server presentation data responsive to the search request;
transforming the original server content data and original server presentation data into transformed content data and transformed presentation data according to a rule; and
outputting the transformed content data using the transformed presentation data on a client computer output peripheral;
wherein the data is output in the form of a unitary, cohesive Web page output.

16. The method of claim 15, including the step of storing the content data in the compilation server.

17. The method of claim 15, wherein the step of transforming the data includes additional processing accomplished with artificial intelligence.

18. The method of claim 15, wherein a template including one or more rules is used to transform the data.

19. The method of claim 18, wherein the template for transforming the data modifies the data based on *when, where, why, who, what* and *how* descriptive elements related to the request.

20. The method of claim 15, wherein the step identifying prospective original content providers is accomplished based on an acquired client profile or variable selected by the client.

21. The method of claim 15, wherein the content data is formatted into categories including an index field, a data category field, a data format field and data field.

22. The method of claim 21, wherein the data stored in the data field is video or graphics data.

23. The method of claim 21, wherein the data stored in the data field is sound or program data.

24. The method of claim 15, wherein the receiving step comprises downloading content data over a network, and the transformed data is provided over a network.

25. The method of claim 16, wherein the transformed data is provided to the client computer that generated the request.

26. A system that provides transformed information along with a transformed presentation in a computer-based environment, the system comprising:
a compilation server to provide sought information to a client over a network;
a search request established by the client;
an original server containing data potentially related to the search request;
original server presentation data, received by the compilation server and responsive to the established client search request; and
a rule used by the compilation server for transforming the original content;
wherein the compilation server transforms original server presentation data into transformed presentation data.

27. The system of claim 26, wherein the rule is chosen by the client.

28. The system of claim 26, wherein the rule derived from a client profile.

29. The system of claim 26, wherein one or more rules are used to transform the original content, and the one or more rules are contained within a template.
